# EUROPEAN PATENT SPECIFICATION

(11) **EP 3 214 944 B1**
(45) Date of publication and mention of the grant of the patent: **25.09.2019**
(21) Application number: 15856274.4
(22) Date of filing: 26.10.2015
(51) Int. Cl.: A23G 1/54, A23G 7/00, A23G 1/00, A23G 3/34

(54) **A METHOD OF PREVENTING, INHIBITING OR MITIGATING BLOOM IN A FILLED CHOCOLATE PRODUCT**
VERFAHREN ZUR PRÄVENTION, HEMMUNG ODER VERRINGERUNG VON WEISSLICHEM BELAG AUF EINEM GEFÜLLTEN SCHOKOLADEPRODUKT
PROCÉDÉ DE PRÉVENTION, D'INHIBITION OU D'ATTÉNUATION DU BLANCHIMENT GRAS DANS UN PRODUIT À BASE DE CHOCOLAT FOURRÉ

(30) Priority: 03.11.2014 SE 1451305
(43) Date of publication of application: 13.09.2017
(73) Proprietor: AAK AB (Publ), 215 32 Malmö (SE)
(72) Inventor: JUUL, Bjarne, DK-8310 Tranbjerg J (DK)
(74) Representative: Patentgruppen A/S
(86) International application number: PCT/SE2015/051131
(87) International publication number: WO 2016/072907

(56) References cited:
- EP-A1- 1 891 864
- EP-A1- 2 078 459
- WO-A1-98/30111
- WO-A1-2013/151423
- GB-A- 755 770
- GB-A- 2 405 827
- US-A1- 2012 244 258
- US-A1- 2012 244 258
- "Chapter 7 - Interactions between fats, bloom and rancidity" In: R.E. Timms: "Confectionery fats handbook", 2003, Oily press, bridgewater, XP9504049, ISBN: 0-9531949-4-9 pages 255-294, * pages 283-288 *
- LE RÃ VÃ REND B J D ET AL: "Modelling the rapid cooling and casting of chocolate to predict phase behaviour", CHEMICAL ENGINEERING SCIENCE, OXFORD, GB, vol. 66, no. 6, 8 December 2010 (2010-12-08), pages 1077-1086, XP028138446, ISSN: 0009-2509, DOI: 10.1016/J.CES.2010.12.007 [retrieved on 2010-12-19]
- EHLERS D ET AL: "Online tempercurve analysis of praline products with the objective of cooling process optimization", JOURNAL OF FOOD PROCESS ENGINEERING, FOOD AND NUTRITION PRESS <WESTPORT, CONN, US, vol. 36, no. 3, 1 June 2013 (2013-06-01), pages 292-301, XP009504048, ISSN: 0145-8876, DOI: 10.1111/J.1745-4530.2012.00691.X [retrieved on 2012-09-14]
- LE REVEREND B.J.D. ET AL.: 'Modelling the rapid cooling and casting of chocolate to predict phase behaviour' CHEMICAL ENGINEERING SCIENCE vol. 66, no. 6, 08 December 2011, pages 1077 - 1086, XP028138446 DOI: 10.1016/J.CES.2010.12.007
- LONCHAMPT, PIERRE ET AL.: 'Fat bloom in chocolate and compound coatings' EUROPEAN JOURNAL OF LIPID SCIENCE AND TECHNOLOGY vol. 106, no. 4, 01 April 2004, pages 241 - 274, XP055013602 DOI: 10.1002/EJLT.200400938

## Description

### TECHNICAL FIELD

The present invention relates to the field of filled chocolate product. More particularly, the invention relates to a method of inhibiting bloom in a filled chocolate product.

### BACKGROUND

The visual appearance of a filled chocolate product such as filled chocolate, chocolate bars and other products enrobed with chocolate plays a key role for the chocolate manufacturer because a less attractive appearance of the confectionary will easily be judged by the consumer to relate to inferior product quality.

An important problem relating to the visual appearance of a chocolate confectionary is the so-called bloom. Bloom is attributed to the formation of fat crystals on the surface of the chocolate product. Bloom is easily recognizable on a chocolate-surface because when blooming has occurred, the surface of the chocolate product will have a rather dull appearance with less gloss and often having clearly visible bloom crystals on the surface. The appearance of bloom, if any, typically takes place after weeks or months of storage.

Migration bloom in chocolate is a complex phenomenon which has been studied for many years without getting a full understanding of the main reasons and their interactions. It is known that the fat content, the fat composition, the tempering quality and the storage conditions all have significant impact on how fast bloom develops on a filled product (Beat migration bloom on chocolate products by optimizing your process, The Manufacturing Confectioner, p. 68-75, May 2010).

Extensive research has been done in above areas but with less focus and research on the actual cooling process and its impact on bloom development and interaction with fat migration.

Individual companies sometimes use different special treatments to optimize bloom stability. Some store the chocolate products in cool conditions for a week or more, others store them in hot conditions for a few days up to one week.

Why these special treatments work in improving bloom stability is not clear.

Also, it differs from application to application whether such special treatments work or not. There is a general belief that the effectiveness is a question of compensation for some factors in the basic production, which may then differ from application to application and time to time.

A particular drawback with these special treatments is that they are involving storage for a week or more in hot and cool conditions and therefore require large storage facilities with extensive temperature control, procedures which are both expensive, time consuming and requiring floor space in the production facility.

For example, it is possible to improve bloom stability in filled chocolates, chocolate coated bars, chocolate tablets with whole nuts or pieces of nuts and other chocolate products by storing the freshly made products one to several days at an elevated temperature. This method is already well known and used in the industry today (R. E. Timms, Confectionery fats handbook, p. 288, 2003).

The procedure is very expensive to practice and needs investments in a special warehouse and more handling by moving product between different warehouses with different temperature settings.

There is thus a need for efficient bloom inhibiting procedures in filled chocolate products which are less time consuming and do not require excessive storage after production.

The present invention addresses such needs and interests.

### SUMMARY

In one aspect, the present invention relates to a method of preventing, inhibiting or mitigating bloom in a filled chocolate product,
said filled chocolate product comprising a chocolate shell comprising a chocolate composition and a center filling comprising fat,
said center filling being partly or fully enclosed by said chocolate shell to obtain a center-filled chocolate shell,
said method comprising
a) an inline heating step
   comprising at least one of
   heating the chocolate shell at a heating temperature of at least 25°C,
   heating the center-filled chocolate shell at a heating temperature of at least 25°C and heating the filled chocolate product at a heating temperature of at least 25°C and said method comprising at least one of
b) a shell cooling step comprising cooling said chocolate shell at a cooling temperature below 20°C,
c) a filling cooling step comprising cooling said center-filled chocolate shell at a cooling temperature below 20°C,
d) a final cooling step comprising cooling said filled chocolate product at a cooling temperature below 20°C,
said inline heating step being comprised in at least one of steps b) - d) or being arranged between steps b) and c) or between steps c) and d).

In an embodiment of the invention said inline heating step comprises heating the chocolate shell at a heating temperature of between 26°C - 35°C, such as 27°C - 34°C or 28°C - 33°C.

In an embodiment of the invention said inline heating step comprises heating the center-filled chocolate shell at a heating temperature of between 26°C - 35°C such as 27°C - 34°C or 28°C - 33°C.

In an embodiment of the invention said inline heating step comprises heating the filled chocolate product at a heating temperature of between 26°C - 35°C such as 27°C - 34°C or 28°C - 33°C.

In an embodiment of the invention said shell cooling step comprises cooling the chocolate shell at a cooling temperature of between 5°C - 19°C, such as between 8°C - 18°C, between 10°C - 17°C or between 12°C - 15°C.

In a further embodiment of the invention said filling cooling step comprises cooling said center-filled chocolate shell at a cooling temperature of between 5°C - 19°C, such as between 8°C - 18°C, between 10°C - 17°C or between 12°C - 15°C.

In an embodiment of the invention said final cooling step comprises cooling the filled chocolate product at a cooling temperature of between 5°C - 19°C, such as between 8°C - 18°C, between 10°C - 17°C or between 12°C - 15°C.

In an embodiment of the invention said inline heating step has a duration of between 1minute - 130 minutes, such as between 2 minutes -120 minutes.

In an embodiment of the invention said inline heating step has a duration of between 2 minutes - 30 minutes, such as 3 minutes - 15 minutes, or 8 minutes - 12 minutes.

In an embodiment of the invention the cooling temperature of said chocolate shell, said filled chocolate shell or said filled chocolate product before onset of said inline heating step is between 10°C - 18°C and the heating temperature during said inline heating step is between 27°C - 34°C and the cooling temperature after the inline heating step is between 10°C - 18°C, said inline heating step having a duration of between 2 minutes - 120 minutes.

In an embodiment of the invention the onset of visible bloom in said filled chocolate product is inhibited for more than 52 weeks when stored at 20°C, and for more than 10 weeks when stored at 23°C.

In an embodiment of the invention said filled chocolate product is made by a process comprising at least one of extrusion, moulding and coating.

In an embodiment of the invention the chocolate composition comprises Cocoa Butter, Cocoa Butter Equivalents, Cocoa Butter improvers or mixtures thereof.

In an embodiment of the invention said fat comprised in the center filling comprises liquid oils, said method slowing down the migration of liquid oil from the center filling into the chocolate shell, thereby slowing down softening of the chocolate shell.

### SHORT DESCRIPTION OF DRAWINGS

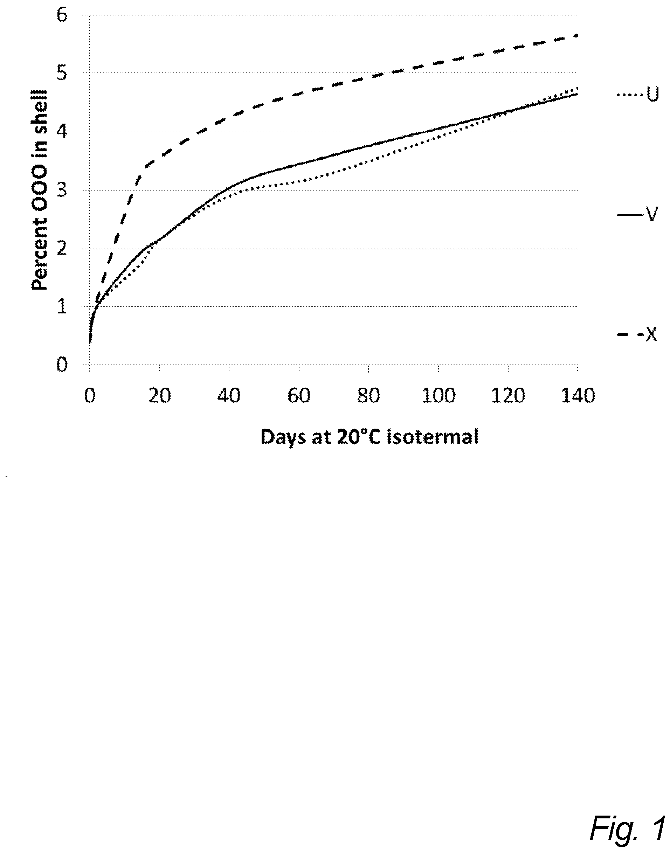

**Fig 1** shows the results of oil-migration measurements, where U designates products that have not received any special bloom-inhibiting treatment, V designates products that have been treated in an inline heating step according to an embodiment of the invention, and X designates products that have received a heat treatment after production in a warehouse according to prior art procedures.

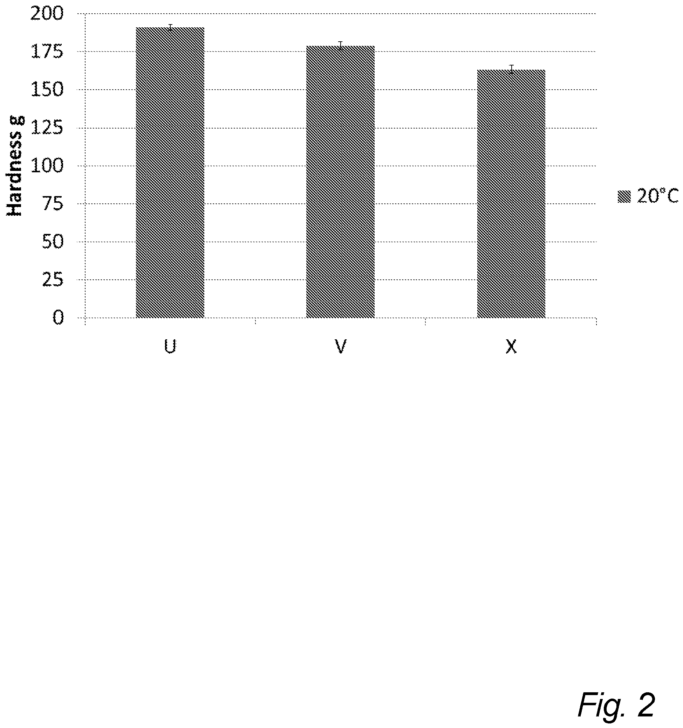

**Fig 2** shows the results of hardness measurements, where U designates products that have not received any special bloom-inhibiting treatment, V designates products that have been treated in an inline heating step according to an embodiment of the invention, and X designates products that have received a heat treatment after production in a warehouse according to prior art procedures.

### DETAILED DESCRIPTION

As used herein, the term "fatty acid" encompasses fatty acid residues in triglycerides.

As used herein, "%" or "percentage" all relates to weight percentage i.e. wt% or wt-% if nothing else is indicated.

As used herein, the singular forms "a", "an" and "the" include plural referents unless the context clearly dictates otherwise.

As used herein, "at least one" is intended to mean one or more, i.e. 1, 2, 3, 4, 5, 6, 7, 8, 9, 10, etc.

As used herein, the word "chocolate" encompasses chocolate and chocolate-like compositions comprising vegetable fats other than cocoa butter, such as Cocoa Butter Equivalents (=CBE) and/or Coco Butter Improvers (=CBI).

As used herein "chocolate" is thus intended to encompass chocolate and chocolate-like compositions if nothing else is specified.

Chocolate may also comprise milk fat and other milk constituents.

As used herein "coating" and "enrobing" or "coated" and "enrobed" is used with the same meaning and interchangeably.

As used herein, "bloom" denotes surface bloom such as fat bloom, including migration fat bloom.

As used herein, a filling being "partially enclosed" by a chocolate shell denotes a filling with is having chocolate covering part of said filling. This can be a dot of chocolate or a shell or coating, enclosing 10, 20, 30, 40, 50 80 or 95% of the filling.

As used herein, "shell" is intended to include a shell on a praline as well as an enrobing/coating on a fat based center such as a bar. The shell on a praline may include a bottom or not. Herein, a shell is made of chocolate or chocolate like composition.

Such shell may be done using different techniques known in the art such as moulding, enrobing, one shot etc. or merely as an added layer. Such techniques are known to someone skilled in the art of filled chocolate products.

Filled chocolate products may be produced by mixing all ingredients for shell/coating and filling separately, followed by refining to desired particle size, conching and tempering.

Shells may then be made by, for example, a moulding process, cooled according to a cooling profile in a shell cooling step. The filling may then be deposited in the shell followed by cooling according to a cooling profile in a filling cooling step. The shell may then be closed in a bottoming step, wherein chocolate may be deposited on top of the filling, and the filled chocolate product may then be cooled according to a cooling profile in a final- or bottom cooling step.

The production of filled chocolate products may alternatively be made by extruding the center filling which is the coated with a chocolate coating followed by cooling according to a cooling profile in a final cooling step. Such a coating is also to be understood as a chocolate shell in the present context.

The production of filled chocolate products may further alternatively be made by shell/coating extrusion at the same time in one step with the center filling, usually called "one-shot" extrusion/coating, followed by cooling according to a cooling profile in a final cooling step.

Optionally, the cooling process may be followed by storage of the filled chocolate product under special storage conditions for a week or more in cool or warm conditions to prevent fat bloom.

As revealed above, the present invention relates to preventing, inhibiting or mitigating fat bloom in a filled chocolate product.

As used herein, a filled product has a fat based center partly or fully covered with chocolate. Examples of filled products are filled chocolates, coated fillings, coated cakes, coated bars etc. Further examples are given herein.

Accordingly, in one aspect the present invention relates to a method of preventing, inhibiting or mitigating bloom in a filled chocolate product,
said filled chocolate product comprising a chocolate shell comprising a chocolate composition and a center filling comprising fat,
said center filling being partly or fully enclosed by said chocolate shell to obtain a center-filled chocolate shell,
said method comprising
a) an inline heating step
   comprising at least one of
   heating the chocolate shell at a heating temperature of at least 25°C,
   heating the center-filled chocolate shell at a heating temperature of at least 25°C and heating the filled chocolate product at a heating temperature of at least 25°C and said method comprising at least one of
b) a shell cooling step comprising cooling said chocolate shell at a cooling temperature below 20°C,
c) a filling cooling step comprising cooling said center-filled chocolate shell at a cooling temperature below 20°C,
d) a final cooling step comprising cooling said filled chocolate product at a cooling temperature below 20°C,
said inline heating step being comprised in at least one of steps b) - d) or being arranged between steps b) and c) or between steps c) and d).

There are many types of moulding applications including tablet moulding, hollow figure moulding and shell moulding of filled chocolates. The present invention relates to moulded or coated, also called enrobed, products with a center filling comprising fat. Coated/enrobed products with a center filling include a wafer, bisquit, fondant or jelly confectionary all with a chocolate coating.

Of the moulded products, especially figure moulded or shell moulded filled chocolates are encompassed by the present invention as long as they are filled products, i.e. products having a center filling comprising fat.

Possible steps for cooling according to the present invention include
b) a shell cooling step comprising cooling said chocolate shell at a cooling temperature below 20°C,
c) a filling cooling step comprising cooling said center-filled chocolate shell at a cooling temperature below 20°C,
d) a final cooling step comprising cooling said filled chocolate product at a cooling temperature below 20°C.

One or more of these steps may be useful in embodiments of the invention.

A cooling step may comprise a cooling profile. For example, a shell cooling step may comprise keeping the shells at a first temperature below 20°C for a desired duration, then optionally keeping the shells at a second temperature below 20°C for a further desired duration and so on. The cooling profile may be simple, for example being an isothermal cooling or more sophisticated involving different temperature below 20°C and different durations.

The same is true for a filling cooling step and a final cooling step.

The inline heating step may according to embodiments of the invention thus be integrated within a certain cooling profile used in on or more of the cooling steps.

For example, if the inline heating step is to be part of the shell cooling step, the shell may be cooled at a first temperature below 20°C for a desired duration followed by the inline heating step, heating the chocolate shell at a heating temperature of at least 25°C for a desired duration, for example 2, 3, 5, 10, 20, 30, 60 or 120 minutes, followed by cooling the shell at a second temperature below 20°C. The process may then proceed according to the remaining cooling profile for the shell coating and the cooling profiles for the filling cooling step and the final cooling step.

An inline heating step may also include a heating profile, including different heating temperatures of at least 25°C.

Such a heating profile may involve heating for example chocolate shells at a first temperature of at least 25°C, for example 25°C, for a desired duration and then heating the chocolate shells at a second temperature of at least 25°C, for example 30°C for a desired duration.

The temperature in a particular cooling step may vary due to the fat composition of the chocolate. For example, it may be 5°C, 8°C, 10°C, 12°C, 14°C, 15°C, 16°C, 17°C, 18°C, 19°C, 20°C or combinations thereof. Normally, it is from about 10°C to about 20°C, such as about 10°C to 18°C, about 11°C to 16°C, about 12°C to 16°C or even about 12°C to 15°C.

The heating temperature is typically a heating at a temperature of about 25°C, 26°C, 27°C, 28°C, 29°C, 30°C, 31°C, 32°C, or even 33°C or 34°C, such as about 25°C to 33°C, or about 27°C to 31°C.

Depending on the chocolate composition, the temperature at which all of the fat crystals in the chocolate melt and all form stability is lost, may vary within certain limits. Accordingly, heating temperatures above such a melting temperature are not desirable.

Heating temperatures in the inline heating step below- but close to - the melting temperature of the most stable crystals in the chocolate composition may be advantageous in some embodiments of the invention.

According to embodiments of the invention, the inline heating step can be placed rather freely inline in the different cooling steps or at the end of one cooling profile and before another cooling profile. For example, an inline heating step may be placed after the shell cooling step and before the filling cooling step.

According to embodiments of the invention, more than one inline heating step may be included in the method.

For example, an inline heating step may be included both in the shell cooling step and in the final cooling step. It is also possible to include an inline heating step at the end of a shell cooling step and a second inline heating step between a filling cooling step and a final cooling step.

According to embodiments of the present invention 3, 4 or more inline heating steps of desired durations may be included in the present method.

As explained above, final cooling step may include bottom-cooling, if for example a moulded chocolate shell is first filled with filling an afterwards closed with a chocolate bottom applied on top of the filling not already being covered by chocolate.

In an extruded filled chocolate product the center filling comprising fat may be extruded, cooled in a filling cooling step, enrobed by chocolate and cooled in a final cooling step.

The production of an extruded filled chocolate may comprise co-extrusion of different fillings, enrobing in different enrobing steps and so on. Clearly, the cooling steps may be adapted to best fit the particular product and may include, for example, separate cooling steps for each enrobing step and so on. One or more inline heating steps may also be included in such a production according to embodiments of the invention. Since inline heating is targeting the chocolate, meaningful heating steps are to be placed inline in connection to or together with the cooling of the chocolate coating.

It has surprisingly been found that inclusion of at least one inline heating step in the method according to the present invention may result in significantly improved filled chocolate products with respect to bloom.

Until the present invention was made, it was common within the art of filled chocolate product manufacture to either accept the rather rapid appearance of bloom on the surface of the product, or the finished product was stored under temperature controlled condition for days or even weeks to, in some cases, obtain a bloom inhibiting effect, postponing the appearance of visible bloom.

The present invention provides a convenient, cost efficient way to achieve bloom inhibition in a filled chocolate product, avoiding extensive temperature controlled offline storage presently in use.

Surprisingly, a bloom inhibiting effect similar to the offline temperature controlled storage may be achieved by integrating inline heating with the cooling steps in the filled chocolate production line.

The integration of one or more inline heating steps solves the problem of bloom in filled chocolate products more efficiently and more predictable than prior art approaches.

This may result in products with longer shelf life, enhanced customer appeal and at a better price due to savings in time, handling and temperature controlled storage facilities.

The energy source useful in an inline heating step may vary according to embodiments of the invention.

For example, convection heating using electrical or other heating means, infrared (=IR) emitting sources, such as quartz- or carbon filaments and gas-catalytic IR radiators, heating by use of ultrasound and/or microwave heating may all be useful in an inline heating step.

In an embodiment of the invention said inline heating step comprises heating the chocolate shell at a heating temperature of between 26°C - 35°C, such as 27°C - 34°C or 28°C - 33°C. According to embodiments of the invention the inline heating step may be arranged as to heat the chocolate shell before it is filled with a center filling comprising fat.

Higher heating temperatures may shorten the duration of the heating step necessary to achieve a desired reduction in bloom.

In an embodiment of the invention said inline heating step comprises heating the center-filled chocolate shell at a heating temperature of between 26°C - 35°C such as 27°C - 34°C or 28°C - 33°C.

The inline heating step may be arranged as to heat the center-filled chocolate shell.

Higher heating temperatures may shorten the duration of the heating step necessary to achieve a desired reduction in bloom.

In an embodiment of the invention said inline heating step comprises heating the filled chocolate product at a heating temperature of between 26°C - 35°C such as 27°C - 34°C or 28°C - 33°C.

The inline heating step may be arranged as to heat the filled chocolate product during a final cooling step, for example a bottom cooling or a coating cooling as described above.

In an embodiment of the invention said shell cooling step comprises cooling the chocolate shell at a cooling temperature of between 5°C - 19°C, such as between 8°C - 18°C, between 10°C - 17°C or between 12°C - 15°C.

Cooling at lower temperatures may speed up the cooling process.

In an embodiment of the invention said filling cooling step comprises cooling said center-filled chocolate shell at a cooling temperature of between 5°C - 19°C, such as between 8°C - 18°C, between 10°C - 17°C or between 12°C - 15°C.

Cooling at lower temperatures may speed up the cooling process

In an embodiment of the invention said final cooling step comprises cooling the filled chocolate product at a cooling temperature of between 5°C - 19°C, such as between 8°C - 18°C , between 10°C - 17°C or between 12°C - 15°C.

Cooling at lower temperatures may speed up the cooling process

In an embodiment of the invention, an inline heating step has a duration of between 1 minute - 130 minutes, such as between 2 minutes -120 minutes.

Longer duration of a heating step may require more floor space because the heating step is an inline heating step and the production line must accommodate the product in a heating step at all times. For slow production lines, longer duration of a heating step may be feasible.

The duration of a heating step may, according to embodiments of the invention, be decreased as the temperature in the heating step is increased.

For example, an inline heating step at 32°C for 11 minutes or 14 minutes, and an inline heating step at 28°C for 31 minutes or 40 minutes may achieve similar bloom-inhibiting effects when measured as time lapsed at isothermal storage at, for example, 20°C before visible bloom appears in products subjected to an inline heating step at higher temperature and shorter duration and product subjected to an inline heating step at lower temperature for longer duration.

In an embodiment of the invention said inline heating step has a duration of between 2 minutes - 30 minutes, such as 3 minutes - 15 minutes, or 8 minutes - 12 minutes.

The duration of an inline heating step may influence the time until visible bloom appears on the filled chocolate product.

The duration may, according to embodiments of the invention, be used to tune the production line with respect to a desired effect.

For example, for some filled chocolate products, prevention of visible bloom for 15 weeks may be sufficient, involving a short duration of a heating step relative to the necessary duration, if a prevention of visible bloom for more than a year is desirable.

In other embodiments, the temperature of the heating step may be used to tune the production line or both temperature and duration.

In an embodiment of the invention the cooling temperature of said chocolate shell, said filled chocolate shell or said filled chocolate product before onset of said inline heating step is between 10°C - 18°C and the heating temperature during said inline heating step is between 27°C - 34°C and the cooling temperature after the inline heating step is between 10°C - 18°C, said inline heating step having a duration of between 2 minutes - 120 minutes.

It is apparent for someone skilled in the art that time for heating is dependent on fat composition in the chocolate, heating temperature, air velocity, product size, filling temperature etc. It is readily appreciated that this has to be tried out for each and every application depending on the specific application and what is feasible in practice. Also, the thickness of the chocolate shell is to be considered; a thicker shell needs more heat or a longer time than a thin shell.

In an embodiment of the invention the onset of visible bloom in said filled chocolate product is inhibited for more than 52 weeks when stored at 20°C, and for more than 10 weeks when stored at 23°C.

Significant bloom inhibition is seen for products produced according to embodiments of the invention.

The exact mechanism at work during the inline heating step effecting the bloom inhibition in the final product is not known. Accordingly, factors such as chocolate composition, filling composition, and quality of chocolate tempering are all expected to play some role regarding the achievable bloom inhibition.

Accordingly, the invention in some of its embodiments is best described by the bloom inhibition seen in products produced according to the present method.

Normally, a higher storage temperature of the final product will lead to faster appearance of visible bloom than a lower temperature. For example, at 20°C storage temperature, the visible bloom in filled chocolate products treated by the current method may first appear after more than a year, while at 23°C storage temperature, visible bloom in the same product may appear after 10, 12, 15, 17 or 20 weeks.

It should be noted that visible bloom in filled chocolate products not treated according to the present method or according to prior art methods for inhibiting bloom, will show visible bloom after about 10 and about 5 weeks at 20°C and 23°C, respectively.

In further embodiments of the invention said filled chocolate product is a chocolate praline, a chocolate tablet with whole nuts or pieces of nuts, a chocolate tablet with fat based filling, a chocolate coated filling, a chocolate coated cake, or a chocolate coated bar.

All kinds of filled chocolate products may benefit from the present method with respect to bloom inhibition and also gloss.

According to embodiments of the invention, high gloss products may be obtained by the present method when compared to prior art methods and compared to products not being optimized with respect to bloom inhibition, especially when the inline heating step has a longer duration and/or if the temperature is relatively high at some point during the inline heating step.

According to an embodiment of the invention said filled chocolate product is made by a process comprising at least one of extrusion, moulding and coating in separate steps of adding said filling fat composition and said chocolate composition or in one step ("one-shot").

According to an embodiment of the invention the chocolate composition comprises Cocoa Butter, Cocoa Butter Equivalents, Cocoa Butter improvers or mixtures thereof.

The chocolate composition used for coatings and shells may vary according to embodiments of the invention.

Bloom inhibiting effects are seen for chocolates with varying compositions and also for chocolates comprising milk fat and other milk constituents.

The center filling may, according to embodiments of the invention, comprise vegetable fats and blends thereof and also milk fat. The vegetable fat or fractions thereof may be hydrogenated or not, interesterified or not, and any mixtures of vegetable fats.

It is known that certain oils in filling fats have a tendency to migrate into the chocolate shell or coating, whereby visible bloom may be promoted.

According to embodiments of the invention this migration bloom is suppressed by the present method, making the fat composition of the center filling less critical.

According to an embodiment of the invention said fat comprised in the center filling comprises liquid oils, said method slowing down the migration of liquid oil from the center filling into the chocolate shell, thereby slowing down softening of the chocolate shell. Migration of oils from the center filling into the chocolate shell or coating may soften the shell in an undesirable way. According to embodiments of the present invention this migration is inhibited, whereby a more form stable filled chocolate product may be obtained, even after long storage time.

This effect is evidenced by the results displayed in Figures 1 and 2 also referred to in Example 7 here below.

### EXAMPLES

The invention is now described by way of examples according to embodiments of the present invention.

### Example 1 - Chocolate- and Filling recipes

This Example describes the recipes used in examples 2-6 below. All numbers indicating amounts here below are in weight percentage.

### Recipes

**TABLE 1 - Chocolate - and Filling Recipes**

| | Dark chocolate | Filling |
|---|---|---|
| Cocoa Powder D-11A | 0.0 | 4.0 |
| Cocoa liquid | 40.0 | 0.0 |
| Cocoa butter | 10.0 | 0.0 |
| Interesterified palm fractions IV50 | 0.0 | 30.0 |
| Sugar | 49.6 | 37.6 |
| Spray dry whole milk powder | 0.0 | 6.0 |
| Spray dry skim milk powder | 0.0 | 5.0 |
| Hazel nut pasta | 0.0 | 17.0 |
| Lecithin | 0.4 | 0.4 |
| Total fat content | 32.4 | 43.2 |

### Procedure

Both the chocolate and filling are produced by mixing all ingredients for the chocolate or the filling, respectively, except for the lecithin and a part of the fat, in a Bauer Meister Mixer to provide chocolate- and filling mixtures which have a suitable consistence for refining.

The well blended mixtures are then refined on a Bühler 400 mm 3 rolls refiner to an average particle size of 20 µm (micron).

The refined filling is then conched for 6 hour at 50°C and the refined chocolate is conched for about 16 hour in total at 60°C, both in a Bauer Meister Conch suitable for up to 50 kg of chocolate.

After about 4 hours conching the remaining fat is added to the mixtures, for example about 1/3 of the total amount of fat.

After five hours of conching lecithin is added.

Both the chocolate and the filling are stored in Nielsen tanks at 50°C until used.

The filling is in all example cooled on a Varimixer Teddy W5A with water jacket from about 50°C to about 32 °C before depositing the filling into the well-tempered chocolate shells. The chocolate tempering is performed on an Aasted AMC 150™ tempering machine.

Chocolate Shells are made by FCT™ Technology (Frozen Cone Technology) or by hand, as indicated in relation to each experiment.

FCT shells have a thickness of about 1.5 mm and freezing settings are -15°C for 3sec. Handmade shells have a thickness of about 1.5 mm too and are made by filling the whole mould with well-tempered chocolate and then cool for 2 min at 20°C before emptying excess chocolate from the mould.

Shell cooling is done in an Aasted Cooling Simulator and in all cases an air velocity at 3.5 m/s is used. Cooling is convection cooling.

For filling- and bottom cooling a Blumen tunnel is used.

Samples are stored for one week at 20°C before bloom evaluation is started.

The above procedures and recipes are used for all following examples unless anything else is specified.

### Example 2 - trials with a modified cooling cycle

Trial A is a reference sample cooled according to prior art procedure, that is, without any heating cycle included.

In trial B the shell cooling is done with a heating step at 27°C. After FCT moulding and 3 min. cooling at 15°C all shells are placed for 2 hours at 27°C before they are filled and continue the process steps shown in Table 2.

Double number of shells is made in trial A.

Half of the filled chocolates from A are just kept at 20°C for 1 week before bloom evaluation starts. Those samples are reference samples.

In trial C the other half of A is kept 1 day at 20°C followed by 2 hours at 27°C and then about 6 days more at 20°C before bloom evaluation starts, see table 2.

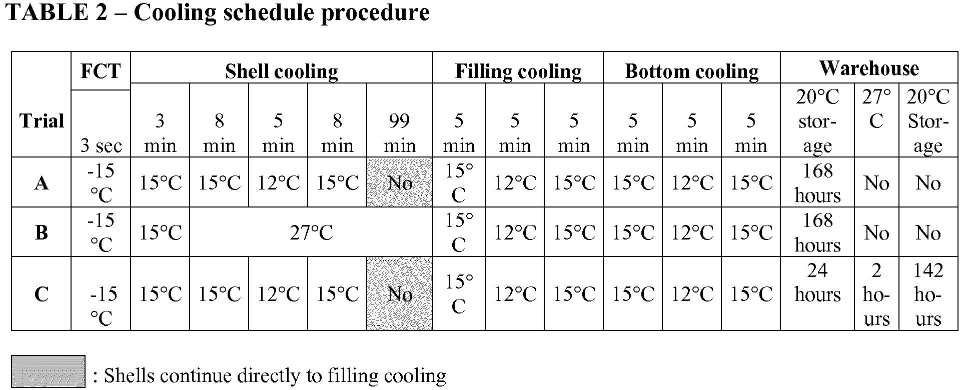

Storage conditions for bloom evaluation are: 15°C, 20°C and 23°C isothermal (Table 3). Evaluation is done every week by a sensory evaluation panel and the number of weeks before strong bloom appears is stated in Table 3.

**TABLE 3 - Storage conditions for bloom**

| **Trial** | **Storage 15°C** | **Storage 20°C** | **Storage 23°C** |
|---|---|---|---|
| **A** | >52 | 10 | 5 |
| **B** | >52 | >52 | 15 |
| **C** | >52 | >52 | 15 |

### Conclusion

Samples from trial B and C have significantly better bloom stability than the reference A at 20°C and 23°C isothermal storage conditions while none of the samples have bloom at 15°C storage.

The process used in trial C is known in and described in the literature. Nevertheless, usually the storage at elevated temperature in the prior art is performed for a longer period than just 2 hours. It is evident from tables 2 and 3 for (Trial C) that even a comparatively short storage at 27°C for 2 hours in the warehouse is greatly enhancing bloom stability.

The cooling method according to the invention and used in trial B introduces heat treatment inline. This is fundamentally different from method C. In B the heat treatment is only done on the chocolate shell without filling inside. The results show that it is possible to improve bloom stability in the process by making a heat treatment on the chocolate shell alone for 2 hours in the beginning of the cooling process.

In conclusion, the positive effect may be connected to the chocolate alone more than to the interaction between chocolate shell and filling.

### Example 3- Effect of time and temperature

Five trials are made to show that the effect from a heat treatment is dependent on both time and temperature.

Table 4 shows the different cooling procedure and Trial D is the reference settings.

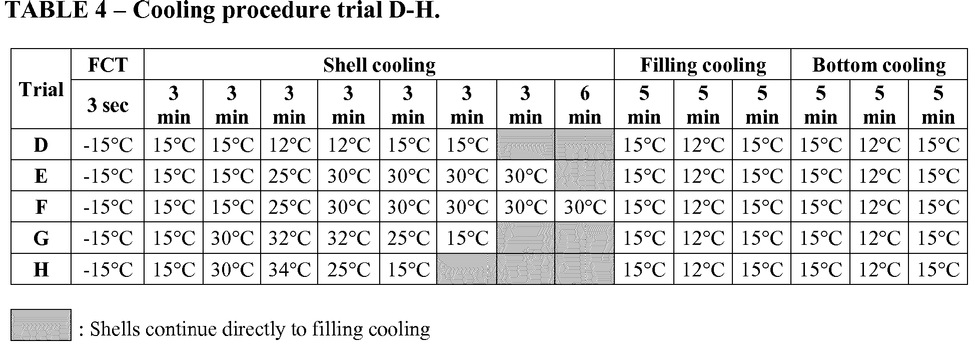

Storage conditions for evaluation of bloom are: 15°C, 20°C and 23°C isothermal.

All filled chocolates are stored 1 week at 20°C before they are placed at the different conditions for bloom test.

Evaluation is done every week by a sensory evaluation panel and number of weeks before strong bloom appears is stated in Table 5.

**TABLE 5 - Bloom at isothermal storage**

| **Trial** | **Bloom at isothermal storage condition** | | | **Gloss²⁾** |
|---|---|---|---|---|
| | **15°C** | **20°C** | **23°C** | |
| **D** | > 52 | 10 | 5 | 8 |
| **E** | > 52 | >52 | 12 | 8 |
| **F** | > 52 | >52 | 16 | 9 |
| **G** | > 52 | >52 | 15 | 9 |
| **H** | > 52 | >52 | 12 | 9 |

| | | | | |
|---|---|---|---|---|
| ²⁾ Gloss is evaluated by a sensory panel. The higher the score, the higher the gloss. | | | | |

A score of 5 denotes no gloss at all and a score of 10 represent the highest possible gloss.

### Conclusion

As shown above, a short intensive inline heat treatment of the shell has a remarkable and surprising bloom inhibiting effect on filled chocolate filled chocolates (see trial D compared to trial E-G in table 5).

More time for heat treatment at a certain temperature (Trial F) induces significantly more bloom stability than shorter times at the same temperature (Trial E).

If the treating temperature is raised, less time is required for the heat treatment (Trial H compared to Trial E and Trial G compared to Trials E and F).

Surprisingly it may be realized that higher temperatures compensate for reduced time at elevated temperature inline, and that spending longer time at elevated temperature inline compensates for a lower heat treatment temperature with respect to the achievable bloom stability (compare Trials F and G).

Unexpectedly, higher gloss may be achieved, especially when the heat treatment is performed for longer time (Trial F) or if the temperature is relatively high at some point during the heat treatment (Trials G and H).

### Example 4 -Inline heat treatment at different positions in the cooling process

Trials J-N in table 6 shows that heat treatment inline is effective irrespective of where in the cooling flow the inline heat treatment is performed.

Heat treatment is in all trials is 12 min at 30°C.

**Tables 6A - 6C: Inline heat treatment at different positions in the cooling process flow**

**Table 6A: Heat treatment during shell cooling before filling cooling (Table 6B) and bottom cooling (Table 6C)**

| **Trial** | **FCT** | **Shell cooling** | | | | | | |
|---|---|---|---|---|---|---|---|---|
| | **3 seconds** | **3 min** | **3 min** | **3 min** | **3 min** | **3 min** | **3 min** | **3 min** |
| **I** | -15°C | 15°C | 15°C | 12°C | 12°C | 15°C | 15°C | 15°C |
| **J** | -15°C | **30°C** | **30°C** | **30°C** | **30°C** | 25°C | 15°C | 12°C |
| **K** | -15°C | 12°C | 15°C | 25°C | **30°C** | **30°C** | **30°C** | **30°C** |
| **L** | -15°C | 15°C | 15°C | 12°C | 12°C | 15°C | 15°C | 15°C |
| **M** | -15°C | 15°C | 15°C | 12°C | 12°C | 15°C | 15°C | 15°C |
| **N** | -15°C | 15°C | 15°C | 12°C | 12°C | 15°C | 15°C | 15°C |

**Table 6B: Heat treatment, after FCT and shell cooling according to table 6A, during filling cooling before bottom cooling according to Table 6 C**

| **Trial** | **Filling cooling** | | | | | | |
|---|---|---|---|---|---|---|---|
| | **3 min** | **3 min** | **3 min** | **3 min** | **3 min** | **3 min** | **3 min** |
| **I** | 15°C | 15°C | 12°C | 12°C | 15°C | 15°C | 15°C |
| **J** | 15°C | 15°C | 12°C | 12°C | 15°C | 15°C | 15°C |
| **K** | 15°C | 15°C | 12°C | 12°C | 15°C | 15°C | 15°C |
| **L** | **30°C** | **30°C** | **30°C** | **30°C** | 25°C | 15°C | 12°C |
| **M** | 12°C | 15°C | 25°C | **30°C** | **30°C** | **30°C** | **30°C** |
| **N** | **15°C** | 15°C | 12°C | 12°C | 15°C | 15°C | 15°C |

**Table 6C: Heat treatment, after FCT and shell cooling according to table 6A, and filling cooling according to Table 6 B**

| **Trial** | **Bottom cooling** | | | | | | |
|---|---|---|---|---|---|---|---|
| | **3 min** | **3 min** | **3 min** | **3 min** | **3 min** | **3 min** | **3 min** |
| **I** | 15°C | 15°C | 12°C | 12°C | 15°C | 15°C | 15°C |
| **J** | 15°C | 15°C | 12°C | 12°C | 15°C | 15°C | 15°C |
| **K** | 15°C | 15°C | 12°C | 12°C | 15°C | 15°C | 15°C |
| **L** | 15°C | 15°C | 12°C | 12°C | 15°C | 15°C | 15°C |
| **M** | 15°C | 15°C | 12°C | 12°C | 15°C | 15°C | 15°C |
| **N** | **30°C** | **30°C** | **30°C** | **30°C** | **25°C** | 15°C | 12°C |

Storage conditions for bloom evaluation are: 15°C, 20°C and 23°C isothermal.

All filled chocolates are stored 1 week at 20°C before they are placed under the different conditions for bloom testing.

Evaluation is done every week by a sensory evaluation panel and the number of weeks before strong bloom appears is given in Table 7.

**TABLE 7 - Bloom at isothermal storage conditions**

| **Trial** | **Bloom at isothermal storage condition** | | |
|---|---|---|---|
| | **15°C** | **20°C** | **23°C** |
| **I** | > 52 | 10 | 5 |
| **J** | > 52 | 29 | 13 |
| **K** | > 52 | >52 | 17 |
| **L** | > 52 | >52 | 13 |
| **M** | > 52 | >52 | 10 |
| **N** | > 52 | >52 | 10 |

### Conclusions

The above trials show that heat treatment can be placed with significant positive effect at different positions in the cooling process flow, see Trial I (reference) compared to trials J-N.

Trial K indicates that an optimum may be heat treating at the end of the shell cooling period. Irrespective of the timing of the heat treatment, advantages with respect to bloom stability are seen when compared to reference Trial I.

### Example 5 - Different product applications

This example shows trials involving three different product applications. It shows that heat treatment has a significant positive effect on not only filled chocolates made by using FCT technology but also other applications where chocolate covers a center.

All trials use the filling and chocolate recipe from Table 1.

### Application O:

Shells are made as in the above example by using FCT technology.
FCT settings: -15°C for 3 sec.

### Application P:

Handmade shells with a thickness as the FCT shells, 1.5 mm +/- 0.1 mm.

A mould is filled with well-tempered dark chocolate and then cooled for 2 min at 20°C. The mould is turned upside down to remove excess chocolate and the mould with handmade shells is now going for cooling, see Table 8

### Application Q:

Filling from recipe table 1 is cooled to 26°C and extruded to small bars having a size of 2x2x5 cm.

The small bars are cooled in a three zones Blumen cooling tunnel for 21 min.

Temperature settings are 15°C-12°C -15°C, table 8.

When fillings are coming out of the tunnel they are enrobed in an Aasted mini enrober with well-tempered dark chocolate, Table 1, and cooled as shown in table 8.

Coating thickness is 1.5 mm +/- 0.2 mm

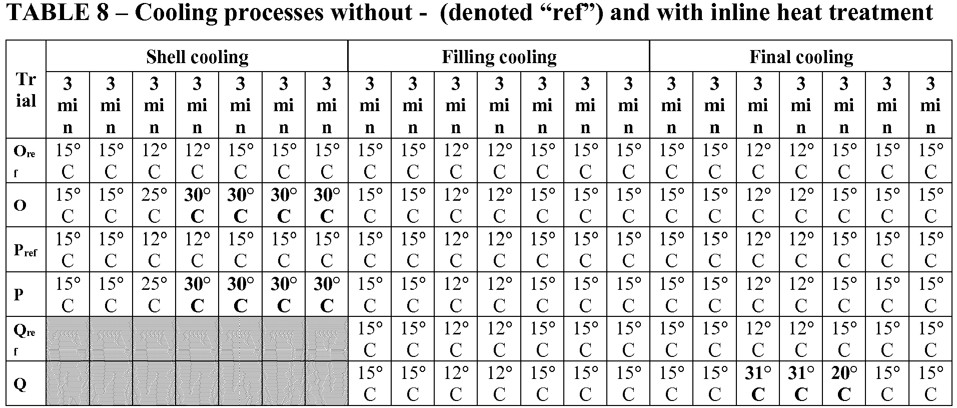

Q thus is an enrobed product the cooling process starting with the filling cooling and the inline heat treatment applied in the final cooling, after enrobing.

Storage conditions for bloom evaluation are: 15°C, 20°C and 23°C isothermal.

All filled chocolates and enrobed products are stored 1 week at 20°C before they are placed at the different conditions for bloom test.

Evaluation is done every week by a sensory evaluation panel and the number of weeks before strong bloom appear is noted in Table 9

**TABLE 9 - bloom at isothermal storage conditions**

| **Trial** | **Bloom at isotermal storage condition** | | |
|---|---|---|---|
| | **15°C** | **20°C** | **23°C** |
| **O_{ref}** | > 52 | 10 | 5 |
| **O** | > 52 | > 52 | 14 |
| **P_{ref}** | > 52 | 11 | 6 |
| **P** | > 52 | > 52 | 13 |
| **Q_{ref}** | > 52 | 8 | 3 |
| **Q** | > 52 | 26 | 4 |

### Conclusion

Inline heat treatment has a significant bloom retarding effect in 3 different applications. It seems that heat the bloom inhibiting effect of the inline heat treatment is a general phenomenon, irrespective of the particular final chocolate product. Thus, the inline heat treatment is useful in different applications involving filled chocolate products (O to Q).

### Example 6 - Further evaluation of the inline heat treatment step

These trials investigate if the surprising bloom-retarding effect from the inline heat treatment is influenced by the rest of the cooling profile. For example, it could be suspected that a fast cooling or a combination between the freezing settings from the Frozen Cone Technology and a low temperature setting at the start of shell cooling may be merely compensated for by the inline heat treatment.

Trials R to T are described in Table 10 where the listed settings display how the shell cooling was done.

Both filling cooling and bottom cooling are the same in all 6 trials in Table 10:
Filling cooling: 15 minutes altogether with temperatures at 15°C for 5 minutes, then 12°C for 5 minutes and at last 15°C for 5 minutes.
Bottom cooling: Same as Filling cooling.

Details of shells made using FCT and handmade shells are given below.

### Trials

### FCT

### Trials R and S

Shell is made as above examples by using FCT.

FCT settings: -15°C for 3 sec.

### Hand made

### Trial T

Handmade shells with a thickness as the FCT shells, 1.5 mm +/- 0.1 mm.

A mould is filled with the well temper dark chocolate and then cooled for 2 min at 20°C. Then the mould is turn upside down to remove excess chocolate.

The moulds with handmade shells are subjected to shell cooling according to Table 10.

**TABLE 10 - Shell cooling cycle without- (denoted "ref') and with inline heat treatment**

| **Trial** | **FC T** | **Hand made** | | | **Shell cooling** | | | | | | |
|---|---|---|---|---|---|---|---|---|---|---|---|
| | | | **8 min** | **3 min** | **3 min** | **3 min** | **3 min** | **3 min** | **3 min** | **3 min** | **3 min** |
| **R_{ref}** | Yes | No | | 15°C | 15°C | 15°C | 12°C | 12°C | 15°C | 15°C | 15°C |
| **R** | Yes | No | | 15°C | 15°C | 25°C | **30°C** | **30°C** | **30°C** | **30°C** | 15°C |
| **S_{ref}** | Yes | No | 20°C | 15°C | 15°C | 15°C | 12°C | 12°C | 15°C | 15°C | 15°C |
| **S** | Yes | No | 20°C | 15°C | 15°C | 25°C | **30°C** | **30°C** | **30°C** | **30°C** | 15°C |
| **T_{ref}** | No | Yes | 20°C | 15°C | 15°C | 15°C | 12°C | 12°C | 15°C | 15°C | 15°C |
| **T** | No | Yes | 20°C | 15°C | 15°C | 25°C | **30°C** | **30°C** | **30°C** | **30°C** | 15°C |

Storage conditions for bloom evaluation are: 15°C, 20°C and 23°C isothermal.

All filled chocolates are stored 1 week at 20°C before they are placed at the different conditions for bloom test.

Evaluation is done every week by a sensory evaluation panel and the number of weeks before strong bloom appears is given in Table 11.

**TABLE 11- Bloom appearance at isothermal storage**

| **Trial** | **Bloom at isotermal storage condition** | | |
|---|---|---|---|
| | **15°C** | **20°C** | **23°C** |
| **R_{ref}** | > 52 | 9 | 4 |
| **R** | > 52 | > 52 | 12 |
| **S_{ref}** | > 52 | 16 | 6 |
| **S** | > 52 | > 52 | 16 |
| **T_{ref}** | > 52 | 16 | 6 |
| **T** | > 52 | >52 | 16 |

### Conclusion

Too harsh shell cooling results in less bloom stability both at 20°C and 23°C storage, compare Rref with S_{ref} and T_{ref}, see Table 11.

Inline heat treatment improves bloom stability for all filled chocolates irrespective of the cooling procedure and the shell preparation method.

This clearly indicates that the bloom- retarding effect from the inline heat treatment is not a mere compensation for, for example, too harsh cooling conditions.

### Example 7 - Inline heat treatment compared to offline warehouse heat treatment

This example shows further positive effects from an inline heat treatment when compared to an offline heat treatment of a final product in the warehouse.

Cooling settings are shown in table 12 and are the same as those used in Example 2, repeated here for convenience.

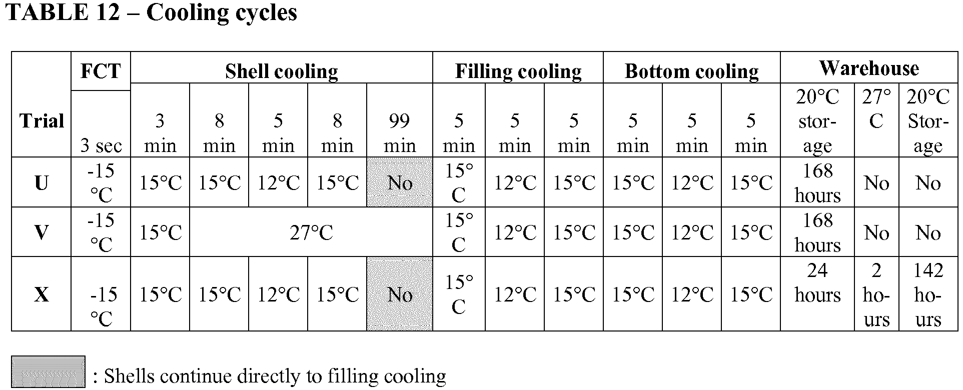

In trial V the shell cooling is done according to an embodiment of the invention, including an inline heat treatment.

After FCT moulding and 3 minutes cooling at 15 °C all shells in trial V are heat treated for 2 hours at 27°C inline before they are filled and continuing the process shown in Table 12.

In trial X the filled chocolates are made in the same way as in trial U but after bottom cooling and 24 hours storage at 20°C they are heat treated offline for 2 hours at 27°C.

Trial U is cooled according to prior art procedure, that is, without any heating cycle included.

Both cooling methods U and X are used in industry today and U is the most common to use. If method X is used, the storage time at elevated temperature offline in the warehouse is usually longer than 2 hours.

Storage conditions for bloom evaluation are: 15°C, 20°C and 23°C isothermal (Table 13). Evaluation is done every week by a sensory evaluation panel and the number of weeks before strong bloom appears is stated in Table 13.

**TABLE 13 - Bloom at isothermal conditions**

| | **Bloom at isotermal storage condition** | | |
|---|---|---|---|
| | **15°C** | **20°C** | **23°C** |
| **U** | > 52 | 11 | 5 |
| **V** | > 52 | > 52 | 14 |
| **X** | > 52 | > 52 | 14 |

From the filled chocolates stored at 20°C samples of trials U, V and X are taken out in intervals during the first 140 days.

Fillings with high content of hazel nut oil will typically migrate to the shell during storage. The speed of migration depends on many different factors like particle size, storage temperature, filling recipe, fat composition, fat content etc.

To identify the migration speed of the filling components, fillings are carefully separated from the shells. The content of tri-olein (OOO) in the shells is analyzed according to a standard method for the samples taken out after various times at 20 °C.

The results are shown in Fig. 1.

The dark chocolate shell has a starting content of tri-olein (OOO) at 0.4%.

During storage this content changes and fig. 1 shows that this content increase fast and different for trials U, V and X during storage at 20°C.

The speed of migration is about the same for U and V but much higher for X which are the filled chocolates which has been heat treated after production, i.e. offline during warehouse storage.

Fig. 2 shows the hardness of the surface of trials U, V and X after 91 days (13 weeks). The hardness is measured at 20 °C and according to a standard method.

U is significantly harder than both V and X but V is closer to U compared to X.

These differences in texture correlate very well with the migration after 91 days (fig 1), standard deviation accounted for.

### Conclusion

It is possible to process filled chocolates in a new process with some significant new benefits.

The prior art approach to improving bloom stability is by applying an offline heat-treatment after production, corresponding to trial X.

This prior art approach has technical disadvantages as more oil migration from the filled center out into the shell occurs, resulting in significant softening of the surface of the praline. From a commercial point of view, it is also a very expensive process due to more handling and substantial investments in specially designed warehouses.

Above trial V shows that it is possible to obtain excellent bloom stability by applying an inline heat treatment and at the same time achieve less migration and softening compared to trial X.

Commercially it is much cheaper to integrate the heat treatment inline in the cooling process, trial V, when compared to the offline treatment, trial X.

The inline heat treatment has the effect of less softening of the surface of the praline which may improve shelf life and customer satisfaction.

Clearly, particularly attractive inline treatments are as short as possible. The processes given in Example 3, trial E-G show, how the inline heat treatment may be integrated into existing cooling procedures without taking up too much time.

### Example 7 - variation of TAG composition

In examples 1 to 6 all shells/coatings are made from dark chocolate based on cocoa butter as the only fat source.

In this example the ratio between the 3 main TAGs (Triacylglycerols: POP, POSt, StOSt) will be varied (see table 14), P stands for palmitic acid, O stands for oleic acid and St stands for stearic acid.

This corresponds to adding a Cocoa Butter Equivalent (=CBE) to the chocolate shell.

Trial Y is the ratio in a typically West African cocoa butter while the other trials use varying compositions of the three TAGs.

**TABLE 14 - variation in TAG composition**

| **Trail** | **POP** | **POSt** | **StOSt** |
|---|---|---|---|
| **Y** | 15.1% | 37.7% | 26.9% |
| **Z** | 30.9% | 12.5% | 34.7% |
| **AA** | 16.6% | 12.4% | 48.1% |
| **BB** | 42.9% | 13.9% | 22.2% |
| **CC** | 12.6% | 29.7% | 36.5% |
| **DD** | 37.8% | 26.8% | 15.2% |
| **EE** | 10.3% | 25.7% | 42.3% |

Recipes used for the shells and fillings in trial Y to EE are found in Table 15.

**TABLE 15 - Recipe used for the shells and filling**

| | Dark Super compound | Filling |
|---|---|---|
| Cocoa Powder D-11A | 15.0 | 4.0 |
| Different TAG-compositions from table 14 | 30.0 | 0.0 |
| Cocoa butter | 0.0 | 0.0 |
| Interesterified palm fractions IV50 | 0.0 | 30.0 |
| Sugar | 48.6 | 37.6 |
| Spray dry whole milk powder | 0.0 | 6.0 |
| Spray dry skim milk powder | 6.0 | 5.0 |
| Hazel nut pasta | 0.0 | 17.0 |
| Lecithin | 0.4 | 0.4 |
| Total fat content | 31.7 | 43.2 |

Procedure and equipment for producing filling and shells is the same as in Example 1 above, all shells being made using FCT.

Cooling settings for shells and their bloom stability are shown in table 16.

Filling and bottom cooling is the same as in Table 4 above.

Storage conditions for bloom tests are: 15°C, 20°C and 23°C isothermal.

All filled chocolates are stored for 1 week at 20°C before they are placed under the different conditions for bloom evaluation.

Bloom evaluation is done every week by a sensory evaluation panel and the number of weeks before strong bloom appears is given in Table 16.

**Table 16 - Shell cooling cycle and bloom evaluation after isothermal bloom storage.**

| **Sample** | **FCT** | **Shell cooling** | | | | | | | | **Isothermal bloom Test (Weeks to bloom)** | | |
|---|---|---|---|---|---|---|---|---|---|---|---|---|
| | **3 seconds** | **3 min** | **3 min** | **3 min** | **3 min** | **3 min** | **3 min** | **3 min** | **3 min** | **15°C** | **20°C** | **23°C** |
| **Y** | -15°C | 15°C | 15°C | 15°C | 15°C | 12°C | 12°C | 15°C | 15°C | >10 | >10 | ***6*** |
| | -15°C | 15°C | 30°C | 30°C | 30°C | 30°C | 25°C | 15°C | 12°C | >10 | >10 | >10 |
| **Z** | -15°C | 15°C | 15°C | 15°C | 15°C | 12°C | 12°C | 15°C | 15°C | >10 | ***6*** | ***6*** |
| | -15°C | 15°C | 30°C | 30°C | 30°C | 30°C | 25°C | 15°C | 12°C | >10 | >10 | ***7*** |
| **AA** | -15°C | 15°C | 15°C | 15°C | 15°C | 12°C | 12°C | 15°C | 15°C | >10 | >10 | >10 |
| | -15°C | 15°C | 30°C | 30°C | 30°C | 30°C | 25°C | 15°C | 12°C | >10 | >10 | >10 |
| **BB** | -15°C | 15°C | 15°C | 15°C | 15°C | 12°C | 12°C | 15°C | 15°C | >10 | ***6*** | ***5*** |
| | -15°C | 15°C | 30°C | 30°C | 30°C | 30°C | 25°C | 15°C | 12°C | >10 | >10 | ***6*** |
| **CC** | -15°C | 15°C | 15°C | 15°C | 15°C | 12°C | 12°C | 15°C | 15°C | >10 | >10 | ***8*** |
| | -15°C | 15°C | 30°C | 30°C | 30°C | 30°C | 25°C | 15°C | 12°C | >10 | >10 | >10 |
| **DD** | -15°C | 15°C | 15°C | 15°C | 15°C | 12°C | 12°C | 15°C | 15°C | >10 | ***8*** | ***6*** |
| | -15°C | 15°C | 30°C | 30°C | 30°C | 30°C | 25°C | 15°C | 12°C | >10 | >10 | ***8*** |
| **EE** | -15°C | 15°C | 15°C | 15°C | 15°C | 12°C | 12°C | 15°C | 15°C | >10 | >10 | >10 |
| | -15°C | 15°C | 30°C | 30°C | 30°C | 30°C | 25°C | 15°C | 12°C | >10 | >10 | >10 |

### Conclusion

A chocolate shell composition which is high in POP-content will experience fastest bloom development, Trials Z, BB and DD. But also these types of shell compositions may benefit from inline heat treatment with respect to bloom stability.

Shell compositions which have medium to high StOSt and low POP benefit from inline heat treatment as well with respect to bloom stability, Trials Y and CC. In this group is Cocoa butter (Y).

When StOSt-content is very high, as in Trials AA and EE, more experiments are to be conducted to possibly verify a positive effect of an inline heat treatment with respect to bloom stability.

That means that inline heat treatment is useful for many different shell compositions and is therefore not just beneficial for chocolate based on 100% cocoa butter.

The findings in the above examples have also been verified for milk chocolate, meaning that the inline heat treatment describe herein is also very useful when processing filled chocolates comprising milk chocolate.

## Claims

1. Method of preventing, inhibiting or mitigating bloom in a filled chocolate product,
said filled chocolate product comprising a chocolate shell comprising a chocolate composition and a center filling comprising fat,
said center filling being partly or fully enclosed by said chocolate shell to obtain a center-filled chocolate shell,
said method comprising
a) an inline heating step
comprising at least one of
heating the chocolate shell at a heating temperature of at least 25 °C,
heating the center-filled chocolate shell at a heating temperature of at least 25 °C and heating the filled chocolate product at a heating temperature of at least 25 °C and
said method comprising at least one of
b) a shell cooling step comprising cooling said chocolate shell at a cooling temperature below 20°C,
c) a filling cooling step comprising cooling said center-filled chocolate shell at a cooling temperature below 20°C,
d) a final cooling step comprising cooling said filled chocolate product at a cooling temperature below 20 °C,
said inline heating step being comprised in at least one of steps b) - d) or being arranged between steps b) and c) or between steps c) and d).

2. The method according to claim 1, wherein said inline heating step comprises heating the chocolate shell at a heating temperature of between 26 °C - 35 °C, such as 27 °C - 34°C or 28 °C - 33 °C.

3. The method according to any of the claims 1 - 2, wherein said inline heating step comprises heating the center-filled chocolate shell at a heating temperature of between 26 °C - 35 °C such as 27 °C - 34°C or 28 °C - 33 °C.

4. The method according to any of the claims 1 - 3, wherein said inline heating step comprises heating the filled chocolate product at a heating temperature of between 26 °C - 35 °C such as 27 °C - 34°C or 28 °C - 33 °C.

5. The method according to any of the claims 1 - 4, wherein said shell cooling step comprises cooling the chocolate shell at a cooling temperature of between 5 °C - 19 °C, such as between 8 °C - 18 °C , between 10 °C - 17 °C or between 12 °C - 15 °C.

6. The method according to any of the claims 1 - 5, wherein said filling cooling step comprises cooling said center-filled chocolate shell at a cooling temperature of between 5 °C - 19 °C, such as between 8 °C - 18 °C , between 10 °C - 17 °C or between 12 °C - 15 °C.

7. The method according to any of the claims 1 - 6, wherein said final cooling step comprises cooling the filled chocolate product at a cooling temperature of between 5 °C - 19 °C, such as between 8 °C - 18 °C , between 10 °C - 17 °C or between 12 °C - 15 °C.

8. The method according to any of the claims 1 - 7, wherein said inline heating step has a duration of between 1minute - 130 minutes, such as between 2 minutes -120 minutes, such as between 2 minutes - 30 minutes, such as 3 minutes - 15 minutes, such as 8 minutes - 12 minutes.

9. The method according to any of the claims 1 - 8, wherein the cooling temperature of said chocolate shell, said filled chocolate shell or said filled chocolate product before onset of said inline heating step is between 10 °C - 18 °C and the heating temperature during said inline heating step is between 27 °C - 34 °C and the cooling temperature after the inline heating step is between 10 °C - 18 °C, said inline heating step having a duration of between 2 minutes - 120 minutes.

10. The method according to any of the claims 1 - 9, wherein onset of visible bloom in said filled chocolate product is inhibited for more than 52 weeks when stored at 20°C, and for more than 10 weeks when stored at 23°C.

11. The method according to any of the claims 1 - 10, wherein said filled chocolate product is made by a process comprising at least one of extrusion, moulding and coating.

12. The method according to any of the claims 1 - 11, wherein the chocolate composition comprises Cocoa Butter, Cocoa Butter Equivalents, Cocoa Butter improvers or mixtures thereof.

13. Method according to any of the claims 1 - 12, wherein said fat comprised in the center filling comprises liquid oils, said method slowing down the migration of liquid oil from the center filling into the chocolate shell, thereby slowing down softening of the chocolate shell.

## Patentansprüche

1. Verfahren zum Verhindern, Hemmen oder Abschwächen von Reif in einem gefüllten Schokoladenerzeugnis, wobei das gefüllte Schokoladenerzeugnis eine Schokoladenhülle, welche eine Schokoladenzusammensetzung umfasst, und eine im Zentrum befindliche Füllung, welche Fett umfasst, umfasst,
wobei die im Zentrum befindliche Füllung teilweise oder vollständig von der Schokoladenhülle eingeschlossen wird, um eine im Zentrum gefüllte Schokoladenhülle zu erhalten,
wobei das Verfahren umfasst
a) einen Inline-Erwärmungsschritt,
welcher mindestens eines von den Folgenden umfasst:
Erwärmen der Schokoladenhülle bei einer Erwärmungstemperatur von mindestens 25°C,
Erwärmen der im Zentrum gefüllten Schokoladenhülle bei einer Erwärmungstemperatur von mindestens 25°C und Erwärmen des gefüllten Schokoladenerzeugnisses bei einer Erwärmungstemperatur von mindestens 25°C und
wobei das Verfahren mindestens einen von den Folgenden umfasst:
b) einen Hüllenabkühlschritt, welcher umfasst, die Schokoladenhülle bei einer Abkühltemperatur von unter 20°C abzukühlen,
c) einen Füllungsabkühlschritt, welcher umfasst, die im Zentrum gefüllte Schokoladenhülle bei einer Abkühltemperatur von unter 20°C abzukühlen,
d) einen abschließenden Abkühlschritt, welcher umfasst, das gefüllte Schokoladenerzeugnis bei einer Abkühltemperatur von unter 20°C abzukühlen,
wobei der Inline-Erwärmungsschritt in mindestens einem der Schritte b) - d) enthalten ist oder zwischen den Schritten b) und c) oder zwischen den Schritten c) und d) vorgesehen ist.

2. Verfahren nach Anspruch 1, wobei der Inline-Erwärmungsschritt umfasst, die Schokoladenhülle bei einer Erwärmungstemperatur zwischen 26°C und 35°C, wie 27°C - 34°C oder 28°C - 33°C, zu erwärmen.

3. Verfahren nach einem der Ansprüche 1-2, wobei der Inline-Erwärmungsschritt umfasst, die im Zentrum gefüllte Schokoladenhülle bei einer Erwärmungstemperatur zwischen 26°C und 35°C, wie 27°C - 34°C oder 28°C - 33°C, zu erwärmen.

4. Verfahren nach einem der Ansprüche 1-3, wobei der Inline-Erwärmungsschritt umfasst, das gefüllte Schokoladenerzeugnis bei einer Erwärmungstemperatur zwischen 26°C und 35°C, wie 27°C - 34°C oder 28°C - 33°C, zu erwärmen.

5. Verfahren nach einem der Ansprüche 1-4, wobei der Hüllenabkühlschritt umfasst, die Schokoladenhülle bei einer Abkühltemperatur zwischen 5°C und 19°C, wie zwischen 8°C und 18°C, zwischen 10°C und 17°C oder zwischen 12°C und 15°C, abzukühlen.

6. Verfahren nach einem der Ansprüche 1-5, wobei der Füllungsabkühlschritt umfasst, die im Zentrum gefüllte Schokoladenhülle bei einer Abkühltemperatur zwischen 5°C und 19°C, wie zwischen 8°C und 18°C, zwischen 10°C und 17°C oder zwischen 12°C und 15°C, abzukühlen.

7. Verfahren nach einem der Ansprüche 1-6, wobei der abschließende Abkühlschritt umfasst, das gefüllte Schokoladenerzeugnis bei einer Abkühltemperatur zwischen 5°C und 19°C, wie zwischen 8°C und 18°C, zwischen 10°C und 17°C oder zwischen 12°C und 15°C, abzukühlen.

8. Verfahren nach einem der Ansprüche 1-7, wobei der Inline-Erwärmungsschritt eine Dauer zwischen 1 Minute und 130 Minuten, wie zwischen 2 Minuten und 120 Minuten, wie zwischen 2 Minuten und 30 Minuten, wie 3 Minuten - 15 Minuten, wie 8 Minuten - 12 Minuten, aufweist.

9. Verfahren nach einem der Ansprüche 1-8, wobei die Abkühltemperatur der Schokoladenhülle, der gefüllten Schokoladenhülle oder des gefüllten Schokoladenerzeugnisses vor dem Beginn des Inline-Erwärmungsschritts zwischen 10°C und 18°C liegt und die Erwärmungstemperatur während des Inline-Erwärmungsschritts zwischen 27°C und 34°C liegt und die Abkühltemperatur nach dem Inline-Erwärmungsschritt zwischen 10°C und 18°C liegt, wobei der Inline-Erwärmungsschritt eine Dauer zwischen 2 Minuten und 120 Minuten aufweist.

10. Verfahren nach einem der Ansprüche 1-9, wobei ein erstmaliges Auftreten von sichtbarem Reif in dem gefüllten Schokoladenerzeugnis für mehr als 52 Wochen gehemmt ist, wenn bei 20°C gelagert wird, und für mehr als 10 Wochen, wenn bei 23°C gelagert wird.

11. Verfahren nach einem der Ansprüche 1-10, wobei das gefüllte Schokoladenerzeugnis durch ein Verfahren, welches mindestens eines von Extrusion, Formgebung und Überziehen umfasst, hergestellt wird.

12. Verfahren nach einem der Ansprüche 1-11, wobei die Schokoladenzusammensetzung Kakaobutter, Kakaobutter-Äquivalente, Kakaobutter-Verbesserer oder Mischungen davon umfasst.

13. Verfahren nach einem der Ansprüche 1-12, wobei das Fett, das in der im Zentrum befindlichen Füllung enthalten ist, flüssige Öle umfasst, wobei das Verfahren die Wanderung von flüssigem Öl aus der im Zentrum befindlichen Füllung in die Schokoladenhülle verlangsamt, wodurch ein Erweichen der Schokoladenhülle verlangsamt wird.

## Revendications

1. Procédé de prévention, d'inhibition ou d'atténuation du blanchiment dans un produit de chocolat fourré,
ledit produit de chocolat fourré comprenant une coque de chocolat comprenant une composition de chocolat et un fourrage central comprenant de la graisse,
ledit fourrage central étant partiellement ou entièrement enfermé par ladite coque de chocolat pour obtenir une coque de chocolat fourrée en son centre,
ledit procédé comprenant
a) une étape de chauffage en ligne
comprenant au moins l'un parmi
le chauffage de la coque de chocolat à une température de chauffage d'au moins 25 °C,
le chauffage de la coque de chocolat fourrée en son centre à une température de chauffage d'au moins 25 °C et le chauffage du produit de chocolat fourré à une température de chauffage d'au moins 25 °C et
ledit procédé comprenant au moins l'un parmi
b) une étape de refroidissement de coque comprenant le refroidissement de ladite coque de chocolat à une température de refroidissement en dessous de 20 °C,
c) une étape de refroidissement de fourrage comprenant le refroidissement de ladite coque de chocolat fourrée en son centre à une température de refroidissement en dessous de 20 °C,
d) une étape de refroidissement finale comprenant le refroidissement dudit produit de chocolat fourré à une température de refroidissement en dessous de 20 °C,
ladite étape de chauffage en ligne étant comprise dans au moins l'une parmi les étapes b) à d) ou étant agencée entre les étapes b) et c) ou entre les étapes c) et d).

2. Procédé selon la revendication 1, dans lequel ladite étape de chauffage en ligne comprend le chauffage de la coque de chocolat à une température de chauffage entre 26 °C et 35 °C, telle qu'entre 27 °C et 34 °C ou entre 28 °C et 33 °C.

3. Procédé selon l'une quelconque des revendications 1 et 2, dans lequel ladite étape de chauffage en ligne comprend le chauffage de ladite coque de chocolat fourrée en son centre à une température de chauffage entre 26 °C et 35 °C, telle qu'entre 27 °C et 34 °C ou entre 28 °C et 33 °C.

4. Procédé selon l'une quelconque des revendications 1 à 3, dans lequel ladite étape de chauffage en ligne comprend le chauffage du produit de chocolat fourré à une température de chauffage entre 26 °C et 35 °C, telle qu'entre 27 °C et 34 °C ou entre 28 °C et 33 °C.

5. Procédé selon l'une quelconque des revendications 1 à 4, dans lequel ladite étape de refroidissement de coque comprend le refroidissement de la coque de chocolat à une température de refroidissement entre 5 °C et 19 °C, telle qu'entre 8 °C et 18 °C, entre 10 °C et 17 °C ou entre 12 °C et 15 °C.

6. Procédé selon l'une quelconque des revendications 1 à 5, dans lequel ladite étape de refroidissement de fourrage comprend le refroidissement de ladite coque de chocolat fourrée en son centre à une température de refroidissement entre 5 °C et 19 °C, telle qu'entre 8 °C et 18 °C, entre 10 °C et 17 °C ou entre 12 °C et 15 °C.

7. Procédé selon l'une quelconque des revendications 1 à 6, dans lequel ladite étape de refroidissement finale comprend le refroidissement du produit de chocolat fourré à une température de refroidissement entre 5 °C et 19 °C, telle qu'entre 8 °C et 18 °C, entre 10 °C et 17 °C ou entre 12 °C et 15 °C.

8. Procédé selon l'une quelconque des revendications 1 à 7, dans lequel ladite étape de chauffage en ligne a une durée entre 1 minute et 130 minutes, telle qu'entre 2 minutes et 120 minutes, telle qu'entre 2 minutes et 30 minutes, telle qu'entre 3 minutes et 15 minutes, telle qu'entre 8 minutes et 12 minutes.

9. Procédé selon l'une quelconque des revendications 1 à 8, dans lequel la température de refroidissement de ladite coque de chocolat, de ladite coque de chocolat fourrée ou dudit produit de chocolat fourré avant le début de ladite étape de chauffage en ligne est entre 10 °C et 18 °C et la température de chauffage pendant ladite étape de chauffage en ligne est entre 27 °C et 34 °C et la température de refroidissement après l'étape de chauffage en ligne est entre 10 °C et 18 °C, ladite étape de chauffage en ligne ayant une durée entre 2 minutes et 120 minutes.

10. Procédé selon l'une quelconque des revendications 1 à 9, dans lequel le début du blanchiment visible dans ledit produit de chocolat fourré est inhibé pendant plus de 52 semaines lorsqu'il est stocké à 20 °C, et pendant plus de 10 semaines lorsqu'il est stocké à 23 °C.

11. Procédé selon l'une quelconque des revendications 1 à 10, dans lequel ledit produit de chocolat fourré est réalisé par un processus comprenant au moins l'un parmi une extrusion, un moulage et un enrobage.

12. Procédé selon l'une quelconque des revendications 1 à 11, dans lequel la composition de chocolat comprend du beurre de cacao, des équivalents de beurre de cacao, des améliorants de beurre de cacao ou des mélanges de ceux-ci.

13. Procédé selon l'une quelconque des revendications 1 à 12, dans lequel ladite graisse comprise dans le fourrage central comprend des huiles liquides, ledit procédé ralentissant la migration de l'huile liquide à partir du fourrage central dans la coque de chocolat, ralentissant ainsi le ramollissement de la coque de chocolat.
